# EUROPEAN PATENT SPECIFICATION

(11) **EP 0 425 360 B1**
(45) Date of publication and mention of the grant of the patent: **21.02.1996**
(21) Application number: 90402968.3
(22) Date of filing: 22.10.1990
(51) Int. Cl.: B29C 49/16, B29C 49/64

(54) **Method for manufacturing biaxially oriented blow containers and apparatus for manufacturing the same**
Verfahren zum Herstellen von biaxial orientierten Behältern und Vorrichtung zum Herstellen derselben
Procédé pour la fabrication de bouteilles soufflées biaxialement orientées et leur dispositif de fabrication

(30) Priority: 23.10.1989 JP 275565/89; 09.02.1990 JP 30495/90
(43) Date of publication of application: 02.05.1991
(73) Proprietor: NISSEI ASB MACHINE CO., LTD., Nagano-ken (JP)
(72) Inventor: Orimoto, Hiroyuki, Ueda-shi, Nagano-ken (JP); Suzuki, Saburo, Ueda-shi, Nagano-ken (JP); Amari, Fumiya, Komoro-shi, Nagano-ken (JP)
(74) Representative: Grünecker, Kinkeldey, Stockmair & Schwanhäusser Anwaltssozietät

(56) References cited:
- EP-A- 0 057 504
- EP-A- 0 237 459
- US-A- 4 839 127
- MODERN PLASTICS INTERNATIONAL. vol. 16, no. 9, September 1986, LAUSANNE CH page 22; 'RELAXATION-STRETCH-NEW ROUTE TO PET BOTTLES'
- PLASTICS ENGINEERING. vol. 36, no. 5, May 1980, MANCHESTER, NEW HAMPSHIRE US pages 66 - 69; LARRY W BRANSOME: 'HOW TO HANDLE HAZE, AND ACETALDEHYDE TOO, IN PET BLOWMOLDING'

## Description

### BACKGROUND OF THE INVENTION

### Field of the Invention

This invention relates to a method for manufacturing heat-treated biaxially oriented blow containers, and apparatus for manufacturing the same.

A method and an apparatus according to the preamble of claims 1 and 7 are disclosed in EP-A-237459.

### Description of the Prior Art

Generally, thin-wall packing containers made of synthetic resin called biaxially oriented blow containers are manufactured by axially orienting a preform injected or extrusion-molded within a mold, and expanding it laterally under pressure of blown air.

In such a molding method as described above, since a preform is designed to be adjusted to the size or shape of a container to be molded, the preform is inevitably designed so as to have a thick-wall. The thick-wall preform has problems in that it requires a time for cooling during injection molding, that it requires much time to adjust temperature of a preform before orientation and blowing, and thereby it is difficult to shorten time for molding cycle.

In view of the above, a molding method has been developed in which biaxially oriented blow molding after temperature control of a preform comprises three steps, primary molding - heat treatment (heating and contraction) - final molding, whereby a primary molded article is molded to be larger than a final molded article, and a preform is designed using the primary molded article as an object to thereby make it possible to form the thick-wall of the preform into the thin-wall.

However, in the aforesaid molding method, means for controlling the heating and contraction of the primary molded article is not provided, and therefore, a large unevenness occurs in contraction, because of which a one-sided wall occurs during re-blow molding. There is another problem in that unevenness occurs in heat resistance. Thus, further improvements have been necessary for practical use.

When polyethyleneterephthalate (PET) is used as raw material of containers, acet-aldehyde (A.A) which is a decomposed generated material of PET resin occurs during molding. The acet-aldehyde itself is an organic material having a smell of certain kind. Therefore, for containers for coke, mineral water, cooking oil, etc., it is necessary to remove the acet-aldehyde as much as possible so as not to change taste and smell of the contents.

Conventionally, the rotational frequency of a screw of injection apparatus is decreased or the injection speed is slowed down so as not to decompose the PET resin. However, this proposal is still insufficient, and as the case may be, highly refined PET resins are used while being aware of high cost.

This invention has been achieved in order to solve the aforementioned task including problems as noted above. An object of this invention is to provide a new method which can manufacture containers free from unevenness of the coefficient of contraction by controlling the contraction in heat treatment of a primary molded article, and which can also manufacture containers with occurrence of acet-aldehyde extremely suppressed.

Furthermore, in containers manufactured by orientation blow molding crystalline resins such as polyethyleneterephtalate, when the content is filled at a high temperature, a neck or body becomes deformed.

In view of the above, conventionally, the neck is crystallized or a portion lower than the neck is heat-treated during or after molding to impart heat resistance thereto.

As one method, a method (See for instance EP-A-237459) has been proposed in which molding of a container is divided into primary and secondary moldings, and a primary molded article whose dimension is larger than that of a container as a final article is heat treated, after which it is molded into a container

In the method carried out simultaneously with molding of container among the aforementioned conventional methods, the heat treatment step is incorporated in the molding step, and therefore, a period of cycle for molding a container becomes long. Moreover, since a mold is heated, there is a limit in temperature of heat treatment, and it was extremely difficult to perform treatment at a temperature in excess of 200°C.

Furthermore, in the case where a molded container is transferred to a heat treatment apparatus separately prepared to perform heat setting, when one-sided wall thickness is present, it is difficult to obtain a homogeneous container and the precision of container comes into question.

On the other hand, in the case where a primary molded article is heat treated and thereafter blow molded into a container, the problem as mentioned above less occurs. However, heat treatment is carried out with the atmosphere sealed, and therefore, the resistance of contraction increases due to an increase in internal pressure caused by the contraction of the primary molded article. In addition, eccentricity occurs to often deviate the center of the bottom, and a trace of gate appears to be deviated to the bottom of a container. Therefore, an article tends to be mistaken as a defective one.

Accordingly, this invention has been achieved in order to solve also the task noted above with respect to prior art. It is an object of the invention to thermally contract a portion lower than a neck portion under moderate tension, while heat-treating a primary molded article, mold a wholly homogeneous heat-resistant container without deviation of the center of the bottom and provide an an apparatus for manufacturing the same.

### SUMMARY OF THE INVENTION

According to this invention, in forming a preform into a primary molded article having configuration of a container by orientation blow molding and contracting the primary molded article by heat treatment to blow mold it into a container, a predetermined internal pressure is maintained in the primary molded article during said heat treatment and the contraction is controlled by said internal pressure; and an increase in pressure within the primary molded article resulting from heating and contraction is controlled by discharge of air within the primary molded article.

Furthermore, according to this invention, there is provided a method which comprises the steps of forming a primary molded article of a predetermined dimension having a configuration of a container by an injection orientation blow molding machine for continuously carrying out operations from injection molding a single layer or multilayer preform to orientation blow molding of a hollow molded article; performing heat treatment wherein a neck of the primary molded article delivered from said injection orientation blow molding machine is held, after which an expansible support rod is inserted into an inner bottom surface to close a mouth portion, the primary molded article is moderately tensed in a longitudinal direction by the support rod having an extreme end thereof fitted into the center of the bottom, all portions other than the neck are heated under said tension, and the primary molded article is formed into a molded article which is homogeneous and whose parts are concentric by the control of heat contraction due to internal pressure and the support of the contracting support rod; and receiving the primary molded article after heat treatment into a mold for molding a container immediately while treatment heat is retained to blow-mold it into a predetermined container.

If necessary, the neck is heated by a retaining member prior to the heat treatment step of the primary molded article and the mouth portion is subjected to crystallizing treatment to impart the heat resistance to the container.

The manufacturing apparatus comprises an injection orientation blow molding machine for continuously carrying out operations from injection molding of a single layer or multilayer preform to orientation blow molding of a primary molded article of a predetermined dimension having a configuration of a container; a circulation transport means for transporting a primary molded article from a heating furnace and a transport device into the heating furnace holding a neck of the primary molded article through the transport device of the primary molded article; a container-molding mold disposed on the outlet side of a circulation transport path for the primary molded article: and a heat treating device comprising an expansible blow pipe and support rod inserted into an inner bottom surface of the primary molded article from the above of a neck holding member, said blow pipe and support rod closing a mouth portion. In case of requiring the heat resistance of the mouth portion, a crystallizing device for a neck of a primary molded article by way of heating is disposed between the injection orientation blow molding machine and the heat treating device, and they can be connected by the transport device.

The support rod used for the aforementioned heat treatment and blow molding is composed of a tubular body for closing a mouth portion of a primary molded article, a sheath tube extended at the lower end of said tubular body, and a hollow rod expansibly fitted into the sheath tube by exerting a spring thereto.

### BRIEF DESCRIPTION OF THE DRAWINGS

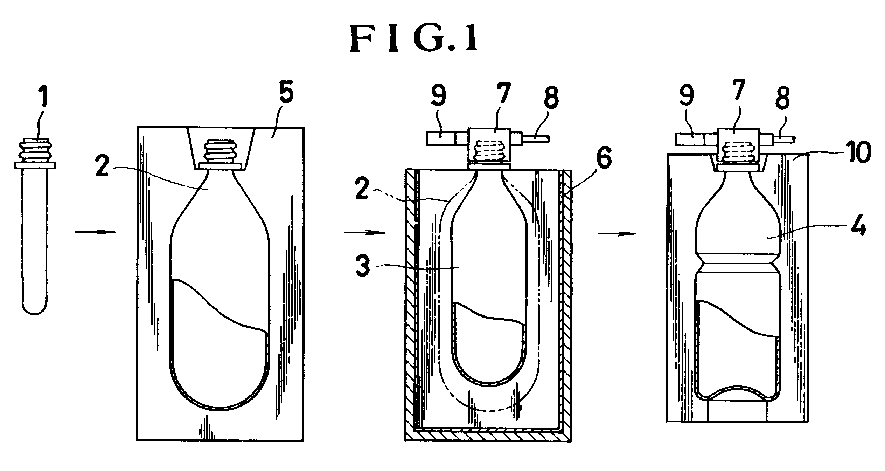

FIG. 1 is a schematic view showing the steps of manufacturing a biaxially oriented blow container according to this invention;
FIG. 2 is a sectional view of a cap member;
FIGS. 3 to 9 schematically show embodiments of apparatus for manufacturing a biaxially oriented blow container according to this invention, FIG. 3 being a side view of a first embodiment, FIG. 4 being a plan view, FIG. 5 being a plan view with an upper part of a heat treating apparatus removed, FIG. 6 being a side view, FIG. 7 being a side view of a second embodiment, FIG. 8 being a plan view, FIG. 9 being a plan view of a third embodiment, and FIGS. 10 to FIG. 12 being respectively longitudinal sectional views for explaining in order the working steps within the heat treating apparatus.

### DETAILED DESCRIPTION OF THE INVENTION

The drawings show in order the molding steps. Reference numeral 1 designates a preform having a bottom subjected to injection molding, 2 a primary molded article, 3 a heat-treated molded article, and 4 a container as a final molded article.

Length, wall thickness and the like of the preform 1 are designed with the primary molded article 2 as an object. Since the primary molded article 2 is blow molded about one and half times as large as the container 4, the primary molded article 2 can be made longer than the case of normal molding, in view of blow magnification, and can be made thinner in wall thickness.

The injection molded preform 1 is adjusted in temperature suited to orientation blow molding, after which it is received into a cavity of a primary blow mold 5 and orientation blow molded into a primary molded article 2 in a conventional manner.

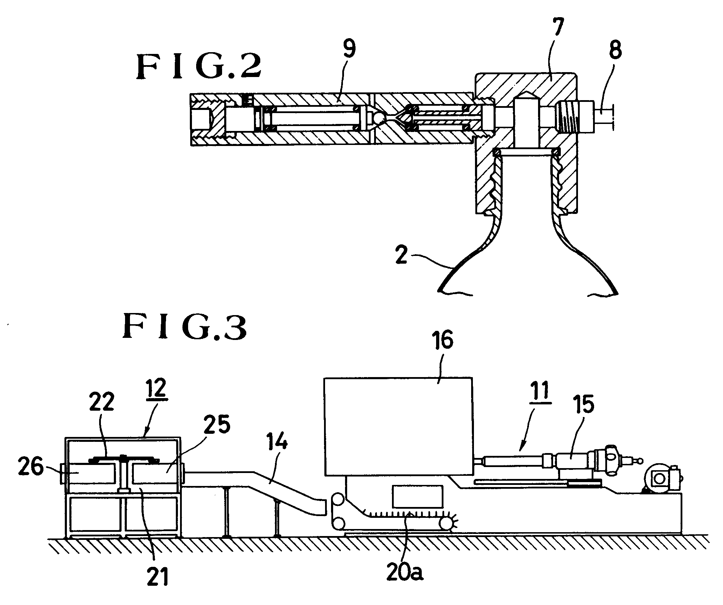

After molding, the primary molded article 2 is sent to a heat treating apparatus 6 such as an oven. At this time, a cap member 7 shown in FIG. 2 is airtightly fitted over the mouth portion of the primary molded article 2.

A high pressure blow air flowpassage 8 and a relief valve 9 for adjusting internal pressure are connected to the cap member 7 so that after sealing, air is supplied from the blow air flowpassage 8 to maintain the primary molded article at constant pressure (0.1 to 2 atmospheric pressure). After preparation as just mentioned, the primary molded article 2 is heated to a predetermined temperature. The primary molded article 2 thus heated starts to contract, and the whole molded article contracts leaving the mouth portion.

This contraction continues till the article becomes smaller than a cavity of a product blow mold 10 for molding the container 4. Since walls of the molded article 3 are tensed by internal pressure, partial contraction is hard to occur, and heat shrinkage occurs in the molded article 3 under the balance with internal pressure, as a consequence of which unevenness of shrinkage is extremely reduced.

At this time, the internal pressure is increased due to the heating and reduction in the molded article 3 to become higher than a set pressure, possibly making it difficut to reduce the configuration. However, this increased pressure comprises no particular trouble since it is eliminated from the relief valve 9.

The thus heated and shrunk molded article 3 is immediately transported to the product blow mold 10 set in the range from normal temperature to 120°C and blow molded into a container 4.

The heat treatment conditions of the primary molded article 2 and the results of heat shrinkage of the molded container 4 are given below.

### Preform (PET) 59 g

Heat treatment conditions (primary molded article: capacity; 2.1 ℓ)

| Sample | Treatment Temperature (°C) | Treatment Time (sec) |
|---|---|---|
| 1 | 160 | 60 |
| 2 | 160 | 120 |
| 3 | 185 | 30 |
| 4 | 185 | 60 |
| 5 | 190 | 60 |

Results (Weight of container; 50 g, capacity; 1.5 ℓ)

| Sample | Average Density of Walls | Coefficient of Contraction(%) |
|---|---|---|
| 1 | 1.3741 | 0.8 |
| 2 | 1.3747 | 0.7 |
| 3 | 1.3721 | 1.6 |
| 4 | 1.3768 | 0.3 |
| 5 | 1.3785 | 0.2 |
| Conventional container | 1.3698 | 2.5 |

Coefficient of contraction results from hot water at 90°C.

For heat treatment of a conventional container (PET), a blow mold is used, and treating temperature is 105°C and time is 25 seconds.

The molding cycle from injection molding of a preform to molding a container 4 was as follows:
The present invention: 27 seconds
Conventional method: 34 seconds.

As will be apparent from the foregoing, in the present invention, since the heat treatment of the primary molded article is carried out while maintaining a predetermined internal pressure, contraction and reduction by way of heating are evenly carried out. In addition, since distribution of wall-thickness is also arranged during the heat treatment, the wall thickness of the container as a final molded article is free from unevenness, and the coefficient of contraction of the container when heated and filled is not sufferred from a significant irregularity, thus providing excellent durability. The molding cycle is shortened and molding efficiency is enhanced as compared with the case of carrying out heat treatment simultaneously with blow molding of a container.

Furthermore, the preform 1 made of PET resin is orientation blow molded to 1.2 to 3.0 times of the container 4 as a final product with a capacity ratio into the primary molded article 2, which is maintained for 20 seconds to 120 seconds at 280°C or less, preferably for 30 seconds or more at 130°C or more and blow molded into the container 4, then there can be obtained a container which extremely reduces occurrence of acet-aldehyde.

Actually, a primary molded article of 2.6 ℓ is orientation blow molded, heated for 60 seconds at a temperature of 180°C and contracted, after which a container of 1.5 ℓ was blow molded. According to the head space measuring method, a quantity of acet-aldehyde was reduced to 0.7268 µg/ℓ after heating treatment whilst 2.5612 µg/ℓ prior to heating treatment.

In view of the foregoing, this invention is extremely effective for molding a container with less occurrence of aldehyde.

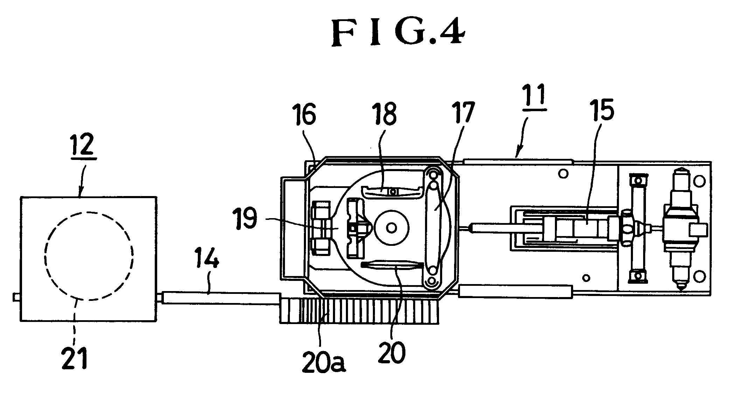

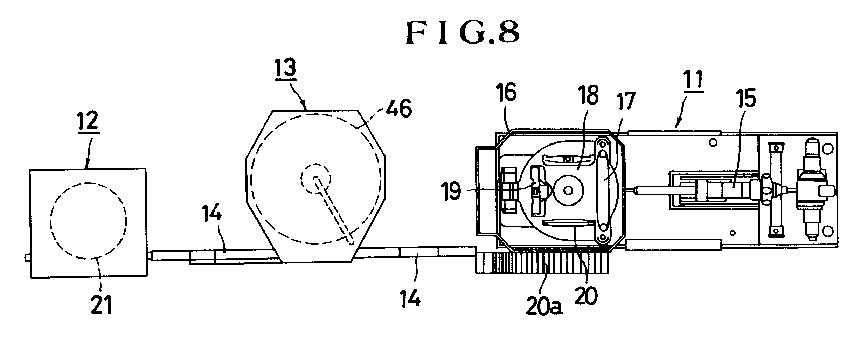

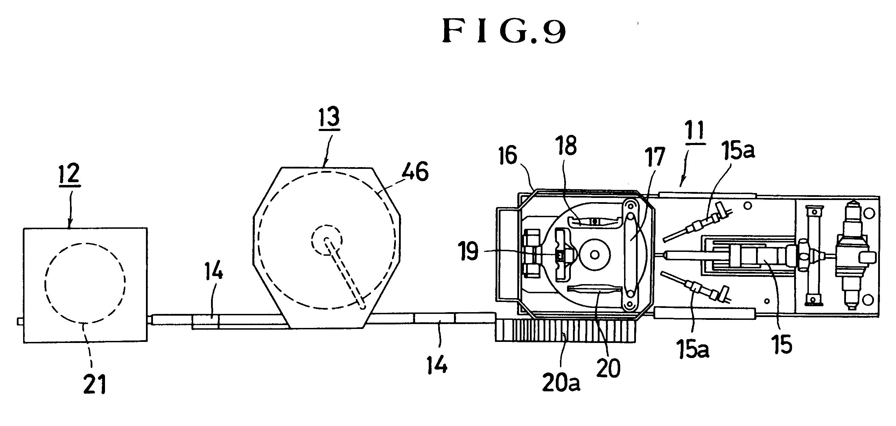

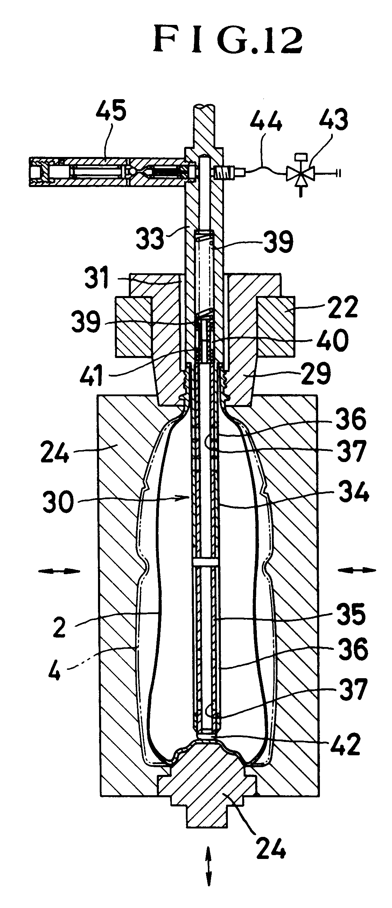

FIGS. 3 to 12 show an apparatus for continuously manufacturing a container from injection molding of a preform.

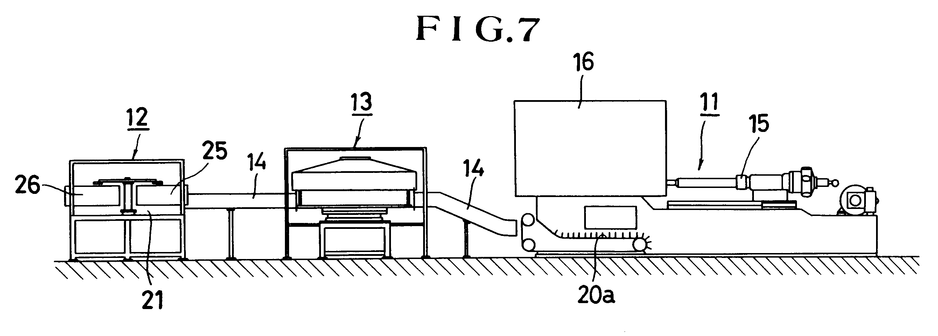

In FIGS. 3 and others, reference numeral 11 designates an injection orientation blow molding machine, 12 a heat treating device, and 13 a neck crystallizing device (see FIG. 7), which are connected by transfer devices 14 and 14.

The injection orientation blow molding machine 11 is of a conventional construction in which an injection device 15 and an orientation blow molding device 16 are provided on a machine bed, wherein a preform molded by an injection molding section 17 is transferred to a temperature control section 18 by an intermittently rotating transfer plate and further transferred to an orientation blow molding section 19 and molded into a predetermined primary molded article (not shown), after which the primary molded article is transferred to a release section 20 and delivered to a conveyor 20a on the machine bed side.

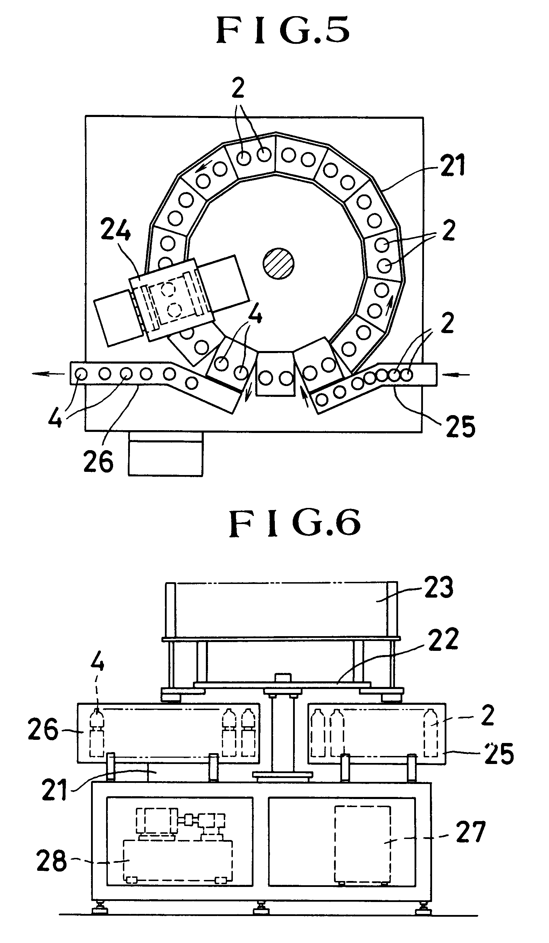

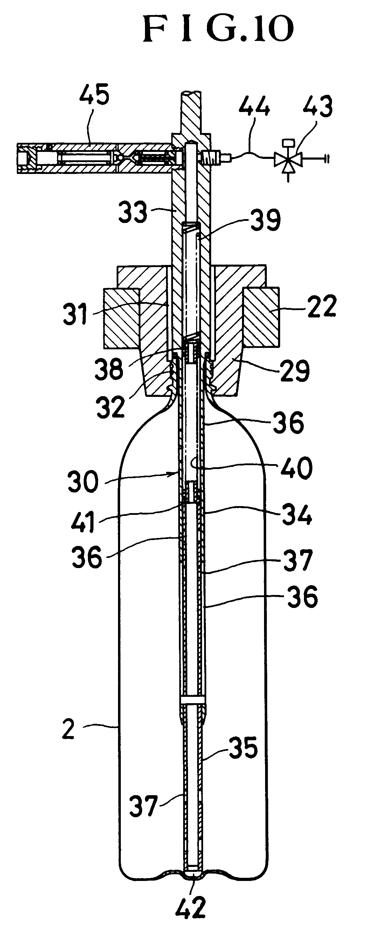

As shown in FIGS. 5 and 6, the heat treating device 12 comprises a heating furnace 21 on the machine bed in the form of an annular tunnel oven, a rotary disk 22 circulated and moved within the heating furnace 21 holding a neck of the primary molded article 2 from the transport device 4, an elevating section 23 for a blow tube and support rod (see FIGS. 10 to 12) provided on the rotary disk 22, and a blow mold 24 for molding a container disposed at an outlet of a circulation transport passage of the primary molded article 2.

A supply station 25 in communication with the transport device 14 and a removal station 26 of a container 4 are provided at an inlet and outlet, respectively, of the heating furnace 21, and a hot air generator 27 and a hydraulic unit 28 for actuation are received into the machine bed.

FIGS. 10 to 12 show a holding member 29 provided on the rotary disk 22, a blow tube and support rod 30, a heating furnace 21, a blow mold 24 and the like. Though not shown in detail, the holding member 29 is composed of a pair of laterally closeable holding pieces provided with a cooling flowpassage, open- and closing surfaces of which are formed with an insert hole 31 for the support rod 30 and a neck holding recess 32 for the primary molded article 2.

The support rod 30 comprises a tubular body 33 received into the insert hole 31 for the holding member 29 to close the mouth portion of the primary molded article 2, and a hollow rod 35 expansibly inserted by the action of a spring member into a sheath tube 34 extended at the lower end of the tubular body 33. Circular and longitudinally extending air holes 36 are provided on both sides of the sheath tube 34, and a plurality of air holes 37 are provided in the side of the hollow rod 35.

The aforesaid sring member for always outwardly urging the hollow rod 35 is composed of two coil springs 39 and 40 arranged up and down through a holder 38. The upper coil spring 39 has a stronger force than that of the lower coil spring 40 in contact with the hollow rod through a holder 41. A press member 42 mounted at the extreme end is pressed against the inner bottom surface of the primary molded article 2 by these spring members.

The tubular body 33 is provided on its upper side with an air supply pipe 44 provided with a three-way valve 43 and a pressure control valve 45 to be closed at the time of high pressure.

Next, manufacturing of a bottle-like biaxially blow container by the aforementioned manufacturing apparatus will be described.

The primary molded article 2 which is in the form a bottle and formed in its central portion of the bottom with a recess into which extreme end of the support rod 30 is fitted is molded by the injection orientation blow molding machine 11.

In the case where the primary molded article is formed of crystalline resin such as polyethylenephthylate, the article is formed to be larger in capacity by approximately 50 to 60 % and longer in height by 1.2 to 1.3 times than the aforementioned container as a final product.

The thus formed primary molded article 2 is then delivered to the heat treating device 12 by a conveyor 20a and the transport device 14.

In the heat treating device 12, the neck of the primary molded article 2 is gripped by the cooled holding member 29 on the side of the rotary disk 22, as shown in FIG. 10. Then, the three-way valve 43 is closed, and the support rod 30 is inserted into the primary molded article 2 from the above of the holding member 29. By this insertion, the tubular body 33 is received into the insert hole of the holding member 29 to close the mouth portion. The hollow rod 35 causes the press member 42 at the extreme end thereof to be fitted into the recess in the central portion of the bottom and is positioned within the primary molded article together with the sheathed tube 34 whereby the lower coil spring 39 is flexed and the primary molded article 18 is vertically tensed by the spring pressure.

The primary molded article 2 is then fed into the heating furnace 21 maintained at approximately 190°C to 230°C by the circulating hot air by the rotary disk 22 from the supply station 25.

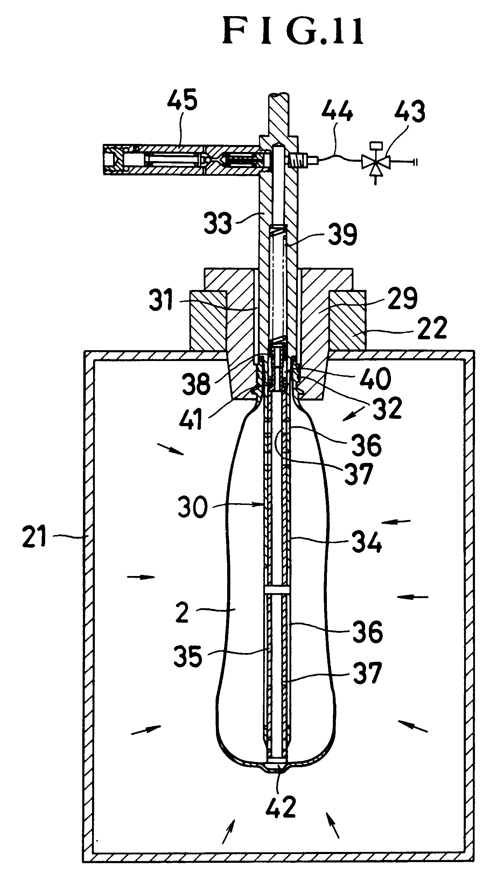

As shown in FIG. 11, the primary molded article 2 shrinks as a portion lower than the neck cooled by the holding member 29 is heated and softened by hot air during the passage thereof into the heating furnace. However, such shrinkage is uniformly generated by the fact that atmospheric pressure remains within the closed molded article which acts as the internal pressure, and by the moderate tension caused by the support of the hollow rod 35 pressed by the spring member.

At this time, the hollow rod 35 is moved backward within the sheath tube 34 till the holders 38 and 41 come into contact with each other while compressing the lower weak coil spring 39 by the contraction force. Furthermore, the internal pressure of the primary molded article 2 is increased by the reduction in capacity resulting from the contraction. However, the internal pressure is controlled so as to have a moderate contraction resistance by a leak caused by the pressure regulating valve 45, and a deviation of the hollow rod 35 from the bottom during the contraction process is prevented by the fitting between the recess and the presss member 42.

The primary molded article 2 contracted till the holders 39 and 41 come into contact with each other is to be a height approximately the same as or slightly over that of the container 4 as a final product, and the diameter of the body portion is formed to be smaller than the diameter of the cavity of the blow mold 24. In the primary molded article 2 after heat treatment, the entire configuration assumes a homogeneous state due to the heating and contraction, and therefore, residual stress or strain during the injection molding and blow molding are not present.

The thus heat treated primary molded article 2 is immediately fed in a soften state together with the support rod 30 into the opened container molding mold 24 at the outlet of the heating furnace 21.

When the primary molded article 2 is stopped at a predetermined position while being supported on the support rod 30, the bottom mold 24a moves upward. The bottom mold 24a pushes up the bottom supported by the hollow rod 35 but the hollow rod 35 compresses the upper coil spring 39 and escapes upwardly. Therefore, the closing of the bottom mold 24a is not impaired, and the bottom is held by the bottom mold 24a in the state as it is to prevent eccentricy of the bottom.

The container molding mold 24 is clamped, after which air of 25 to 30 kg/cm² is blown to the primary molded article 2 through the support rod 30. This air blowing is momentarily carried out by operating the three-way valve 43 to connect the support rod to an air source, and the primary molded article 2 is expanded fully within the cavity and molded into a container 19.

Opening after blow molding is carried out after high pressure air within the container has been discharged. The discharge of air is completed in a moment by switching the three-way valve 43 to the release side to connect it to the support rod side.

The container 4 molded by the aforementioned steps is already in the heat set state prior to blow molding and is therefore excellent in heat resistance over the container obtained by normal orientation blow molding, which container can be used as a container for contents required to be filled at high temperature as it is.

While in the above-described embodiment, fitting between the press member 42 at the extreme end of the hollow rod and the center of the bottom of the primary molded article 2 is carried out by the recess formed on the bottom side, it is to be noted that the press member side and bottom side may be formed into a concave and a convex, respectively, as the case may be.

While in the drawing, feeding of the primary molded articles 2 to the heating furnace 2 is carried out in paired relation, it is to be noted that the number of feeding can be changed to increase or decrease the processing ability.

In the case where the necessity of imparting the heat resistance to also the neck exists, the neck crystallizing device 13 is disposed between the injection orientation blow molding machine 1 and the heat treating device 12 to first carry out the crystallization of the neck of the primary molded article 2.

The crystallization by this apparatus by heating the neck of the primary molded article 2 inserted into the annular neck-heating oven 46 by hot air, and the neck is crystallized during the circulating movement of the primary molded article 2 at a constant speed by means of a chain or the like so as to have the heat resistance. The thus crystallization processed primary molded article 2 is then transported to the next heat treating device 12.

Furthermore, in the case where the container 4 is multilayered, the injection device 15 for molding a body and an injection device 15a for an adhesive layer are disposed on the injection orientation blow molding machine 1, as shown in FIG. 7, whereby a neck or a portion lower than the neck or the whole body may be molded into a multilayer when the primary molded article is injection molded.

In this invention, as mentioned above, the primary molded article subjected to the injection orientation blow is blow-molded immediately after the heat treatment and molded into a container as a final product. Therefore, this article can be subjected to heat treatment at higher speed than that of the case where the container subjected to orientation blow is heat-treated later so as to have the heat resistance, and it is molded in a preform of the size close to the final product in the state where the residual stress is removed by the heat treatment, because of which the residual stress at that time is less than that of prior art and a change in lapse of time after molding less occurs.

Moreover, since the primary molded article formed to be larger than a container as a final product is heated and contracted while tensing it by the expansible support rod and internal pressure, a contraction stabilized as a whole is obtained even at a higher heat treating temperature over 200°C, and homogeneous containers which have high density and without deviation of center can be produced in volume. When PET is used as raw material resin of containers, occurrence of acetaldehyde is extremely supressed by means of sufficient heat treatment. Thus, preferable containers for drinking are available.

Furthermore, the crystallization of the neck can be carried out if necessary, and as the manufacturing apparatus, an injection orientation blow molding machine normally used can be used except that a blow mold device is incorporated into the heat treating device, because of which the apparatus is not particularly complicated and high technique for operation is not required. In addition, the state of the primary molded article is in the high orientation magnification, and therefore, a high degree of crystallization (density) is already obtained at that time. Accordingly, the processing time for higher crystallization by heat treatment is suffice to be short, and a container such as a bottle having higher properties (shock resistance, reduction strength, etc.) than prior art can be obtained.

## Claims

1. A method for manufacturing a bi-axially oriented blow container, comprising the following steps:
forming a pre-form into a primary molded article having a configuration of a container by orientation blow molding, contracting said primary molded article by heat treatment, and
receiving the primary molded article after the heat treatment into a mold for blow molding it into the final container, **characterized in that** during said heat treatment a pre-determined internal pressure is maintained in the primary molded article, and
said contraction is controlled by said internal pressure.

2. A method for manufacturing a biaxially oriented blow container according to claim 1, wherein an increase in pressure within the primary molded article resulting from heating and contraction is controlled by discharge of gas within the primary molding article.

3. A method for manufacturing a biaxially oriented blow container according to claim 1, wherein the orientation blow of a preform made of polyethyleneterephtalate is up to 1.2 to 3.0 times of a container formed into a final product at a volume ratio, and the contraction caused by the heat treatment of the primary molded article is maintained for 20 to 120 seconds at a temperature below 280°C to reduce an occurrence of acet-aldehyde from the polyethyleneterephthalate.

4. A method for manufacturing a bi-axially oriented low container according to one of claims 1, 2 or 3, wherein during the heat treatment the primary molded article is moderately tensed in a longitudinal direction by a support rod having an extreme end thereof fitted into the centre of the bottom of the article, all portions other than the neck of the article are heated under said tension, said contraction is thereby controlled by the internal pressure and the support of the support rod.

5. A method for manufacturing a biaxially oriented blow container according to claim 4, wherein moderate tensing of a center of the bottom in a longitudinal direction is carried out by fitting the center of the bottom and the extreme end of the support rod.

6. A method for manufacturing a biaxially oriented blow container according to claim 4, wherein the neck is heated prior to the step of heat-treating the primary molded article to effect the crystallizing process of the mouth portion.

7. An apparatus for manufacturing a bi-axially oriented blow container, the apparatus comprising
An orientation blow molding machine (11) for carrying out orientation blow molding of a primary mold article having a configuration of a container,
a transport device (4) for primary molded articles delivered from said orientation blow molding machine (11),
a heat treating device (12) comprising a heating furnace (21) a circulation transport means (22, 29) for transporting the primary molded article (2) from said transport device (4) into the heating furnace (21) while holding a neck of said primary molded article,
a container molding mold (24) disposed at an outlet of the circulation transport means of the primary molded article (2), **characterized by**
an expansible blow tube and support rod (30) to be inserted to an inner bottom surface of the primary molded article from the above of a neck holding member (29) provided on the circulation transport means (22,29) to close a mouth portion of the article.

8. An apparatus for manufacturing a biaxially oriented blow container according to claim 7, wherein a device (13) for crystallizing a neck of the primary molded article by way of heating is provided between the injection orientation blow molding machine (11) and the heat treating device (12), said molding machine and said device being connected by a transport device (14).

9. An apparatus for manufacturing a biaxially oriented blow container according to claim 7, wherein the support rod (30) comprises a tubular body (33) for closing the mouth portion of the primary molded article (2), a sheath tube (34) extended at the lower end of said tubular body and a hollow rod (35) expansibly inserted into said sheath tube by action of a spring (39, 40), said sheath tube and said hollow rod having air holes (36) in the side thereof.

## Patentansprüche

1. Verfahren zum Herstellen eines biaxial orientierten, geblasenen Behälters, das die folgenden Schritte umfaßt:
Formen eines Vorformlings in einen vorgeformten Artikel, der die Form eines Behälters aufweist, durch orientiertes Blasformen, Schrumpfen des vorgeformten Artikels durch Wärmebehandlung, und
Aufnehmen des vorgeformten Artikels nach der Wärmebehandlung in einer Form zum Blasformen in einen fertigen Behälter,
**dadurch gekennzeichnet,**
daß während der Wärmebehandlung ein vorbestimmter Innendruck in dem vorgeformten Artikel gehalten wird, und
die Schrumpfung durch den Innendruck gesteuert wird.

2. Verfahren zum Herstellen eines biaxial orientierten, geblasenen Behälters gemäß Anspruch 1, worin ein Erhöhen des Drucks in dem vorgeformten Artikel, der von der Erwärmung und Schrumpfung resultiert, durch Abblasen von Gas aus dem vorgeformten Artikel gesteuert wird.

3. Verfahren zum Herstellen eines biaxial orientierten, geblasenen Behälters gemäß Anspruch 1, worin das orientierte Blasen eines Vorformlings, der aus Polyethylenterphthalat hergestellt ist, bis 1.2 bis 3.0 mal dem Volumenverhältnis zu dem Behälter beträgt, der in das fertige Produkt geformt ist, und die Schrumpfung, die durch Wärmebehandlung des vorgeformten Artikels verursacht wird, für 20 bis 120 Sekunden bei einer Temperatur unterhalb 280° C gehalten ist, um das Auftreten von Azetaldehyd aus dem Polyethylenterphthalat zu reduzieren.

4. Verfahren zum Herstellen eines biaxial orientierten, geblasenen Behälters gemäß einem der Ansprüche 1, 2 oder 3, worin während der Wärmebehandlung der vorgeformte Artikel in Längsrichtung durch einen Stützstab mit einem äußersten Ende, das in der Mitte des Artikels des Bodens eingepaßt ist, moderat gespannt wird, wobei alle Bereiche, außer dem Hals des Artikels, erwärmt werden unter dieser Spannung, und wobei die Schrumpfung durch den Innendruck und die Abstützung des Stützstabes gesteuert ist.

5. Verfahren zum Herstellen eines biaxial orientierten, geblasenen Behälters gemäß Anspruch 4, worin moderates Spannen der Mitte des Bodens in eine Längsrichtung durch Einpassen des äußersten Ende des Stützstabes in die Mitte des Bodens ausgeführt wird.

6. Verfahren zum Herstellen eines biaxial orientierten, geblasenen Behälters gemäß Anspruch 4, worin der Hals vor dem Schritt des Wärmebehandelns des vorgeformten Artikels erwärmt wird, um den Kristallisationsvorgang des Mundbereiches zu bewirken.

7. Vorrichtung zum Herstellen eines biaxial orientierten, geblasenen Behälters, wobei die Vorrichtung umfaßt:
eine Maschine (11) zum orientierten Blasformen, die das orientierte Blasformen eines vorgeformten Artikels mit einer Form eines Behälters ausführt,
eine Transportvorrichtung (14) für vorgeformte Artikel, die von der Maschine (11) zum orientierten Blasformen geliefert werden,
eine Wärmebehandlungsvorrichtung (12), die einen Wärmeofen (21), eine Umlauftransporteinrichtung (22, 29) zum Transportieren des vorgeformten Artikels (2) von der Transportvorrichtung (14) in den Wärmeofen (21), während ein Hals des vorgeformten Artikels gehalten wird, umfaßt,
eine Behälterformmulde (24), die an einem Austrag der Umlauftransporteinrichtung des vorgeformten Artikels (2) angeordnet ist,
**gekennzeichnet durch**
ein expandierbares Blasrohr und expandierbaren Stützstab (30), die in eine innere Bodenfläche des vorgeformten Artikels von oberhalb eines Halteelementes (29) eingeführt werden, das an der Umlauftransporteinrichtung (22, 29) vorgesehen ist, um einen Mundbereich des Artikels zu schließen.

8. Vorrichtung zum Herstellen eines biaxial orientierten, geblasenen Behälters, gemäß Anspruch 7, worin eine Vorrichtung (13) zum Kristallisieren eines Halses des vorgeformten Artikels durch Wärme zwischen der Maschine (11) zum Einspritz/orientierten Blasformen und der Wärmebehandlungsvorrichtung (12) vorgesehen ist, wobei die Formmaschine und die Vorrichtung durch eine Transportvorrichtung (14) verbunden sind.

9. Vorrichtung zum Herstellen eines biaxial orientierten, geblasenen Behälters gemäß Anspruch 7, worin der Stützstab (30) einen Rohrkörper (33) zum Schließen des Mundstücks des vorgeformten Artikels (2), ein Hüllrohr (34), das sich an dem unteren Ende des Rohrkörpers erstreckt, und einen Hohlstab (35) umfaßt, der ausfahrbar in dem Hüllrohr durch Wirkung einer Feder (39, 40) eingeführt ist, wobei das Hüllrohr und der Hohlstab Luftlöcher (36) in der Seite aufweisen.

## Revendications

1. Procédé pour fabriquer un récipient soufflé à orientation bi-axiale, comprenant les phases suivantes ;
transformer une ébauche en un article moulé primaire ayant la configuration d'un récipient, par moulage par soufflage avec orientation, contracter ledit article moulé primaire par un traitement thermique, et
placer l'article moulé primaire après le traitement thermique dans un moule pour le transformer en récipient fini par moulage par soufflage, caractérisé en ce que, pendant ledit traitement thermique, on entretient une pression interne prédéterminée dans l'article moulé primaire, et
ladite contraction est maîtrisée par ladite pression interne.

2. Procédé pour fabriquer un récipient soufflé à orientation bi-axiale selon la revendication 1, dans lequel un accroissement de pression dans l'article moulé primaire qui résulte du chauffage et de la contraction est réglé par introduction de gaz dans l'article moulé primaire.

3. Procédé pour fabriquer un récipient soufflé à orientation bi-axiale selon la revendication 1, dans lequel le soufflage avec orientation d'une ébauche faite de polyéthylène téréphtalate peut atteindre en rapport de volume 1,2 à 3,0 fois le volume d'un récipient transformé en un produit fini, et la contraction provoquée par le traitement thermique de l'article moulé primaire est maintenue pendant 20 à 120 secondes à une température inférieure à 280°C pour réduire le dégagement d'acétaldéhyde du polyéthylène téréphtalate.

4. Procédé pour fabriquer un récipient soufflé à orientation bi-axiale selon une des revendications 1, 2 ou 3, dans lequel, pendant le traitement thermique, l'article moulé primaire est tendu modérément dans une direction longitudinale par une tige d'appui ayant une de ses extrémités engagée dans le centre du fond de l'article, toutes les parties autres que le goulot de l'article sont chauffées sous ladite tension, ladite contraction est alors maitrisée par la pression interne et par l'appui sur la tige d'appui.

5. Procédé pour fabriquer un récipient soufflé à orientation bi-axiale selon la revendication 4, dans lequel on procède à une mise sous tension modérée du centre du fond dans la direction longitudinale en mettant le centre du fond en bonne position de coopération avec l'extrémité extrême de la tige d'appui.

6. Procédé pour fabriquer un récipient soufflé à orientation bi-axiale selon la revendication 4, dans lequel on chauffe le goulot avant la phase de traitement thermique de l'article moulé primaire pour réaliser le processus de cristallisation de la partie de bouche.

7. Installation pour fabriquer un récipient soufflé à orientation bi-axiale, la machine comprenant :
une machine (11) de moulage par soufflage avec orientation servant à effectuer le moulage par soufflage avec orientation d'un article moulé primaire ayant la configuration d'un récipient,
un dispositif transporteur (14) pour les articles moulés primaires fournis par ladite machine de moulage par soufflage avec orientation (11),
un dispositif de traitement thermique (12) comprenant un four de chauffage (21), un moyen de transport à circulation (22, 29) servant à transporter l'article moulé primaire (2) dudit dispositif transporteur (14) dans le four de chauffage (21) tout en retenant le goulot dudit article moulé primaire,
un moule (24) de moulage de récipients disposé à une sortie du moyen de transport à circulation de l'article moulé primaire (2), caractérisée par
un tube de soufflage expansible et une tige d'appui (30) destinée à être insérée jusqu'à une surface interne du fond de l'article moulé primaire, en partant d'au-dessus d'un élément (29) de retenue du goulot, prévu sur le moyen de transport à circulation (22, 29), pour fermer une partie de bouche de l'article.

8. Installation pour fabriquer un récipient soufflé à orientation bi-axiale selon la revendication 7, dans laquelle un dispositif (13) destiné à cristalliser le goulot de l'article moulé primaire par chauffage est prévu entre la machine (11) de moulage par injection et soufflage avec orientation et le dispositif de traitement thermique (12), ladite machine à mouler et ledit dispositif étant reliés par un dispositif transporteur (14).

9. Installation pour fabriquer un récipient soufflé à orientation bi-axiale selon la revendication 7, dans lequel la tige d'appui (30) comprend un corps tubulaire (33) servant à fermer la partie de bouche de l'article moulé primaire (2), un tube formant gaine (34) qui s'étend à l'extrémité inférieure dudit corps tubulaire et une tige d'appui (35) logée dans ledit tube formant gaine avec possibilité d'extension par l'action d'un ressort (39, 40), ledit tube formant gaine et ladite tige creuse ayant des trous de passage de l'air (36) dans leur côté.
